Europäisches Patentamt

European Patent Office

Office européen des brevets

(19)

(11) Veröffentlichungsnummer : **0 353 542 B1**

(12) **EUROPÄISCHE PATENTSCHRIFT**

(45) Veröffentlichungstag der Patentschrift :
30.09.92 Patentblatt 92/40

(51) Int. Cl.$^5$ : **C04B 35/58,** C04B 35/04,
C04B 35/48, B22D 11/04

(21) Anmeldenummer : **89113199.7**

(22) Anmeldetag : **19.07.89**

(54) **Unter Druck gesinterte, polykristalline Mischwerkstoffe auf Basis von hexagonalem Bornitrid, Oxiden und Carbiden.**

(30) Priorität : **21.07.88 DE 3824849**

(43) Veröffentlichungstag der Anmeldung :
**07.02.90 Patentblatt 90/06**

(45) Bekanntmachung des Hinweises auf die
Patenterteilung :
**30.09.92 Patentblatt 92/40**

(84) Benannte Vertragsstaaten :
**BE CH DE FR GB IT LI SE**

(56) Entgegenhaltungen :
**EP-A- 0 195 417
DE-B- 1 017 069
GB-A- 742 324**

(56) Entgegenhaltungen :
**CHEMICAL ABSTRACTS, Band 106, Nr. 8, Februar 1987, Seite 297, Zusammenfassung Nr. 54817x, Columbus, Ohio, US; & JP-A-61 202 754 (SHINAGAWA REFRACTORIES CO., LTD) 08-09-1986**

(73) Patentinhaber : **Elektroschmelzwerk Kempten GmbH
Herzog-Wilhelm-Strasse 16
W-8000 München 2 (DE)**

(72) Erfinder : **Sindlhauser, Peter
Hochvogelweg 34
W-8969 Probstried (DE)**
Erfinder : **Hunold, Klaus, Dr. Dipl.-Ing.
Hochgratweg 8
W-8961 Lauben (DE)**
Erfinder : **Lipp, Alfred, Dr. Dipl.-Chem.
Bürgermeister-Singer-Strasse 15
W-8937 Bad Wörishofen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind ausgewählte, unter Druckanwendung gesinterte, polykristalline Mischwerkstoffe auf Basis von hexagonalem Bornitrid, Oxiden und Carbiden, die insbesondere für Ablöse- oder Brechringe beim horizontalen Stranggießen von Stahl und Nichteisenmetallen verwendet werden können.

Beim horizontalen Stranggießen von Stahl ist die Kokille luftdicht mit einem Verteilergefäß verbunden. Die Erstarrung des Stahls, d.h. die Bildung der Strangschale in der Kokille, erfolgt daher nicht wie bei allen anderen Stranggießanlagen an einer Phasengrenzfläche zwischen flüssigem Stahl und dem umgebenden Gas, sondern in einer zusammenhängenden flüssigen Phase.

Der Übergang vom Verteiler zur Kokille bildet ein Ofenstein, der fest im Ofen eingesetzt ist, und kokillenseitig eine Ausgußdüse die aus einem hochwertigen, feuerfesten Material, z.B. Zirkonoxid, besteht, da sie hohe Wärmespannungen aufnehmen muß. An diese Ausgußdüse schließt sich der Ablöse- oder Brechring an, der ein für den Horizontal-Strangguß charakteristisches Bauteil ist. Dieser Ablösering muß im Dauerbetrieb gewährleisten, daß ab dieser Stelle die Bildung der Strangschale beginnt. Er dient somit dazu, den Ort der Erstarrung genau in der Kokille festzulegen. Da nicht zu vermeiden ist, daß sich am Ablösering selbst ebenfalls eine Schale bildet, muß diese leicht ablösbar sein und darf mit dem Material des Ablöseringes keine Zwischenphase bilden. Außerdem wird eine hohe Thermoschockbeständigkeit und hohe Abriebfestigkeit verlangt.

Bei den ab 1960 entwickelten Anlagen zum horizontalen Stranggießen von Stahl sind Ablöseringe aus keramischem Material, wie Siliciumnitrid, Zirkonoxid, Bornitrid oder Aluminiumnitrid, bekannt geworden. Es wurde jedoch ebenfalls bekannt, daß bei Einsatz von beispielsweise Siliciumnitridringen typische Fehlerscheinungen des Horizontal-Stranggießens, wie Querrisse an der Oberfläche beim Ausziehen des erstarrten Stranges aus der Kokille, nicht verhindert werden konnten.

Feuerfeste Mischwerkstoffe auf Oxidbasis, die aufgrund von Graphitzusatz besonders haltbar sind und sich deshalb für Tauchausgüsse bei konventionellen Stranggießverfahren besonders bewährt haben (vgl. DE-A-29 36 480, DE-A-30 03 046 und DE-A-36 27 337) können jedoch für Brechringe beim horizontalen Stranggießen nicht verwendet werden, weil hierdurch das Vergießen von hochlegierten Sonderstählen gestört wird, die besonders empfindlich gegen die Aufnahme von Kohlenstoff sind.

Feuerfeste Werkstoffe aus gesintertem stabilisiertem Zirkonoxid mit einem Bornitridgehalt von nicht mehr als 20 % (vgl. JP 50-21 575, ref. in C.A. 100: 196759e (1984)) genügen indessen ebensowenig den gestellten Anforderungen wie solche aus Zirkonoxid mit einem Bornitridgehalt von bis zu 70 %, die unter Verwendung von Gemischen aus granuliertem und pulverförmigem Bornitrid hergestellt wurden, dementsprechend porös (Porosität mindestens 15 %) und damit nur von geringer Dichte sind (vgl. JP 78-45 312, ref. in C.A. 89: 94066p (1978)), da Abplatzungen und Ausspülungen am Brechring nicht zu vermeiden sind. Das ist nicht nur mit einem erhöhten Verschleiß der Brechringe selbst, sondern auch mit unerwünschten Einlagerungen im Stahl verbunden, die insbesondere bei den für hochlegierte Sonderstähle erforderlichen langen Gießzeiten eine deutliche Qualitätsverminderung zur Folge haben.

Werkstoffe aus Bornitrid allein oder auf Bornitridbasis , in welchen der hexagonale Bornitridanteil 80 bis 60 Gew.-% beträgt und der Oxidanteil aus Zirkonoxid oder Magnesiumoxid besteht mit einer ausreichenden Dichte von mindestens 94 % TD (bezogen auf das Bornitrid-Oxidgemisch) haben gegenüber den übrigen bekannten Materialien den Vorzug, daß sie von Stahl und Stahllegierungen praktisch nicht benetzt werden und außerdem leicht zu bearbeiten sind, was insbesondere für die Erzielung einer genauen Paßform des Brechrings am Einsatzort von entscheidender Bedeutung ist.

Aus hexagonalem Bornitrid allein gefertigte Brechringe sind aber zu weich und haben eine zu geringe mechanische Festigkeit, so daß sie bereits beim Vergießen von niedrig legierten Stählen zu Abplatzungen und Ausspülungen neigen. Durch Oxidzusatz, insbesondere $ZrO_2$- oder MgO-Zusätze werden zwar - unter der Voraussetzung, daß die Werkstoffe unter Druck bis zu einer Dichte von mindestens 94 % TD gesintert worden sind - verbesserte Eigenschaften erzielt (vgl. DE-A-35 10 111), die jedoch insbesondere beim Vergießen von hochlegierten Sonderstählen, wie Cr-Ni-Stählen den gestellten Anforderungen hinsichtlich mechanischer und chemischer Beständigkeit nicht genügen.

Es stellt sich somit die Aufgabe, den Werkstoff auf Basis von Bornitrid und Oxiden durch Auswahl geeigneter Zusätze so zu verbessern, daß er für die Verwendung als Ablöse- oder Brechring beim horizontalen Stranggießen nicht nur von Stahl sondern auch von Nichteisenmetallen den gestellten Anforderungen genügt.

Unter Nichteisenmetallen sind nach DIN 17600 unlegierte Metalle mit Ausnahme des Eisens und Legierungen, in denen ein beliebiges Metall - ausgenommen Eisen - den größten Einzelgehalt darstellt, zu verstehen.

Diese Aufgabe wird erfindungsgemäß dadurch gelöst daß unter Druck gesinterte, polykristalline Mischwerkstoffe auf Basis von Bornitrid, Oxiden und Carbiden vorgeschlagen werden, in welchen der hexagonale Bornitridanteil 30 bis 85 Gew.-%, der Oxidanteil ausgewählt aus der Gruppe von Zirkonoxid und Magnesiumoxid 10 bis 50 Gew.-% und der Carbidanteil ausgewählt aus der Gruppe von Siliciumcarbid, Titancarbid und Zirkoncarbid 5 bis 20 Gew.-% beträgt, mit einer Dichte von mindestens 94 % der theoretisch möglichen Dichte (bezogen auf das Bornitrid-Oxid-Carbidgemisch).

Als Ausgangsmaterialien für die Herstellung der erfingungsgemäß zu verwendenden Mischwerkstoffe werden vorteilhaft hexagonale Bornitridpulver mit einem Sauerstoffgehalt von 2 bis 8 Gew.-% und einer spezifischen Oberfläche von 5 bis 30 m²/g (gemessen nach der BET-Methode) und die ausgewählten Oxid-, bzw. Carbidpulver mit einer Reinheit von jeweils mindestens > 97 % eingesetzt.

Als Oxidpulver können handelsübliche unstabilisierte, teilstabilisierte und vollstabilisierte Zirkonoxidpulver verwendet werden, die in bekannter Weise mit Oxidzusätzen, wie Magnesiumoxid, Ceroxid oder Yttriumoxid teil- oder vollstabilisiert worden sein können. Das als Stabilisierungsmittel ebenfalls bekannte Calciumoxid ist indessen nicht bevorzugt, wenn die Mischwerkstoffe als Brechringe beim Stranggießen Verwendung finden sollen, um unerwünschte Reaktionen des Stahls mit dem Calciumoxid zu vermeiden.

Als Carbidpulver können anstelle von SiC (α- und/oder β-SiC) oder zusätzlich zu SiC TiC und/oder ZrC-Pulver eingesetzt werden.

Diese Pulver können in an sich bekannter Weise in einer üblichen Mischvorrichtung, gegebenenfalls unter Mitverwendung eines temporären Bindemittels homogen vermischt und dann unter Druckanwendung gesintert werden bis zur Erzielung der Dichte von mindestens 94 % TD. Dabei können die Gemische in Graphitformen unter biaxialer Druckanwendung bei Temperaturen von 1500° bis 1800°C, vorzugsweise 1600° bis 1700°C unter Stempeldruck von 7 bis 20 MPa, vorzugsweise 9 bis 11 MPa heißgepresst werden. Stattdessen können die Gemische auch in einer vakuumdicht geschlossenen Hülle bei einer Temperatur von 1400° bis 1700°C, vorzugsweise 1500° bis 1600°C unter einem Druck von 100 bis 300 MPa, vorzugsweise 100 bis 200 MPa im Hochdruckautoklaven unter Verwendung eines inerten Gases als Druckübertragungsmedium isostatisch heißgepresst werden. Aus den so erhaltenen Blöcken werden entsprechende Formteile in den gewünschten Abmessungen herausgearbeitet.

Die unter Druck gesinterten, polykristallinen Mischwerkstoffe bestehen aus einer hexagonalen Bornitridphase, einer Carbidphase und Oxidphasen, wobei die Bornitridphase mit dem im Ausgangspulver vorhandenen Boroxid (ausgedrückt durch den $O_2$-Gehalt im angegebenen Bereich) gebunden ist. Das Boroxid wirkt als Sinterhilfsmittel, vermutlich unter teilweiser Bildung von Boroxynitridphasen.

Mischwerkstoffe, in welchen der hexagonale Bornitridanteil 50 bis 70 Gew.-%, der Carbidanteil aus Siliciumcarbid besteht und 5 bis 15 Gew.-% beträgt und der Oxidanteil aus Zirkonoxid besteht, der mit Magnesiumoxid oder Yttriumoxid teil- oder vollstabilisiert worden ist, mit einer Dichte von mindestens 95 % TD, haben sich für den vorgesehenen Verwendungszweck als Brechringe beim horizontalen Stranggießen sowohl von Stahl und insbesondere von hochlegierten Sonderstählen als auch von Nichteisenmetallen bewährt. Mischwerkstoffe dieser bevorzugten Zusammensetzung sind gegenüber flüssigen Metallen wie Titan, Nickel und Chrom chemisch beständiger als Mischwerkstoffe der bisher bekannten Zusammensetzung ohne Carbidzusatz. Sie zeigen eine deutlich geringere mechanische Erosion und ein verbessertes Verschleißverhalten. Sie haben verbesserte mechanische Eigenschaften, wie Biegespannung und E-Modul; sie sind mechanisch gut bearbeitbar und zeichnen sich durch eine hohe Thermoschockbeständigkeit aus. Außerdem verursachen sie eine wesentlich geringere Blasenbildung unter der Strangoberfläche des gegossenen Stranges, was insbesondere für den Einsatz im horizontalen Stranggießbereich von entscheidender Bedeutung für die Qualität der Gußstücke ist.

Die erfindungsgemäßen Mischwerkstoffe können außer auf dem Gebiet des Metallgießens auch auf anderen Gebieten eingesetzt werden, für welche die genannten Eigenschaften von Bedeutung sind, beispielsweise als Tiegelmaterial beim Herstellen von Einkristallen aus Metall-Legierungen.

In dem folgenden Beispiel wird der Erfindungsgegenstand näher erläutert.

**Beispiel**

Ein Pulvergemisch aus 35 Gew.-% $ZrO_2$, teilstabilisiert mit 5,0 Gew.-% $Y_2O_3$, 10 Gew.-% SiC und 54 Gew.-% Bornitrid ($O_2$-Gehalt 4 Gew.-%, spezifische Oberfläche 12 m²/g) und 1 Gew-% eines temporären Binders wurde in Graphitformen zu einem Sinterkörper bei 1700°C und 11 MPa heißgepresst. Die Blockgröße war d 240 x h 220 mm. Die erreichte Dichte lag bei 95 % der theoretischen Dichte.

Aus diesem körper wurden Ablöseringe und Proben für weitere Untersuchungen herausgearbeitet.
Tabelle 1 zeigt die gemessenen Werte im Vergleich zu reinem BN und einem bisher verwendeten Mischwerkstoff (BN + $ZrO_2$).
Tabelle 2 zeigt die erreichten Ergebnisse beim Einsatz dieses Werkstoffes als Ablösering im Horizontal-Strangguß von Stahl. Vergossen wurde ein 18 %-iger Cr-Ni-Stahl.

In einem speziellen Versuch wurde die chemische Stabilität von reinem BN, BN + $ZrO_2$ und BN + $ZrO_2$ + SiC in Verbindung mit einer Cr-Ni-Stahlschmelze gemessen. Dabei wurde der $N_2$-und Borgehalt in der erstarrten Stahlprobe nach Kontakt mit den Werkstoffen gemessen. Die in Tabelle 2 angegebenen Werte sind nach einer Kontaktzeit von 6 Minuten ermittelt worden.

Tabelle 1

| Maßgröße | | Dimension | Bornitrid senkrecht zur Preßrichtung | Bornitridgemisch BN + $ZrO_2$ | Gemisch BN + $ZrO_2$ + SiC |
|---|---|---|---|---|---|
| E-Modul | | $N/mm^2$ | 45.000 | 54.000 | 75.000 |
| Biegebruchfestigkeit | | $N/mm^2$ | 45 | 77 | 155 |
| Härte | | HK 0.1 | 250 | 410 | 325 |
| Therm. Ausdehnung | | $K^{-1}$ | $4,0 \times 10^{-6}$ | $5,0 \times 10^{-6}$ | $3,5 \times 10^{-6}$ |
| Wärmeleitfähigkeit | 20 °C | W/mK | 41,5 | 50,0 | 35,0 |
| | 1000 °C | | 20,6 | 18,0 | 14,0 |

EP 0 353 542 B1

Tabelle 2:

| | Bornitrid | Bornitrid + 30 % $ZrO_2$ | Bornitrid + $ZrO_2$ + SiC |
|---|---|---|---|
| Stahlqualität | 18 % Cr-Ni-Stahl | 18 % Cr-Ni-Stahl | 18 % Cr-Ni-Stahl |
| Gießzeit | 60 Minuten | 60 Minuten | 120 Minuten |
| vergossene Menge | 25 t | 25 t | 50 t |
| Verschleiß | ringförmige Ausspülung verstärkte Abplatzungen Ring nicht weiter verwendbar | deutliche Ausspülungen geringe Abplatzungen, Ring nur bedingt weiter verwendbar | nur geringe Ausspülungen und Abplatzungen, Ring weiter verwendbar |
| $N_2$-Gehalt in Stahlprobe Massengehalte in % | 0,33 | 0,09 | 0,05 |
| B-Gehalt in Stahlprobe, Massegeh. in % | 0,17 | 0,05 | 0,02 |
| Intensität Blasenbildung Basis ist Bornitrid mit 100 % | 100 | 25 – 35 | 5 – 10 |

EP 0 353 542 B1

**Patentansprüche**

1. Unter Druck gesinterte, polykristalline Mischwerkstoffe auf Basis von Bornitrid, Oxiden und Carbiden, in welchen der hexagonale Bornitridanteil 30 bis 85 Gew.-%, der Oxidanteil ausgewählt aus der Gruppe von Zirkonoxid und Magnesiumoxid 10 bis 50 Gew.-% und der Carbidanteil ausgewählt aus der Gruppe von Siliciumcarbid, Titancarbid und Zirkoncarbid 5 bis 20 Gew.-% beträgt, mit einer Dichte von mindestens 94 % der theoretisch möglichen Dichte (bezogen auf das Bornitrid-Oxid-Carbidgemisch).

2. Verfahren zur Herstellung der Mischwerkstoffe nach Anspruch 1, dadurch gekennzeichnet, daß Pulvergemische aus hexagonalem Bornitrid mit einem Sauerstoffgehalt von 2 bis 8 Gew.-% und einer spezifischen Oberfläche von 5 bis 30 m$^2$/g (gemessen nach der BET-Methode) und aus den ausgewählten Oxid- und Carbidpulvern mit einer Reinheit von jeweils > 97 % bei Temperaturen im Bereich von 1500° bis 1800°C unter Stempeldruck von 7 bis 20 MPa heißgepresst oder in einer vakuumdicht geschlossenen Hülle bei Temperaturen im Bereich von 1400° bis 1700°C unter einem Druck von 100 bis 300 MPa im Hochdruckautoklaven unter Verwendung eines inerten Gases als Druckübertragungsmedium isostatisch heißgepresst werden.

3. Verwendung der Mischwerkstoffe gemäß Anspruch 1 als Ablöse- oder Brechringe beim horizontalen Stranggießen von Stahl und Nichteisenmetallen.


**Claims**

1. Pressure-sintered polycrystalline mixed materials with a base of boron nitride, oxides and carbides in which the hexagonal boron nitride fraction is 30 to 85% by weight, the oxide fraction selected from the group comprising zirconium oxide and magnesium oxide is 10 to 50% by weight, and the carbide fraction selected from the group comprising silicone carbide, titanium carbide and zirconium carbide is 5 to 20% by weight and which have a density of at least 94% of the theoretically possible density (based on the boron nitride/oxide/carbide mixture).

2. Process for producing the mixed materials according to Claim 1, characterised in that powder mixtures composed of hexagonal boron nitride having an oxygen content of 2 to 8% by weight and a specific surface of 5 to 30 m$^2$/g (measured by the BET method) and of the selected oxide and carbide powders with a purity of > 97% are hot-pressed in each case at temperatures in the range from 1500° to 1800°C under a die pressure of 7 to 20 mpa or are isostatically hot-pressed in a vacuum tight closed case at temperatures in the range from 1400° to 1700°C under a pressure of 100 to 300 MPa in a high-pressure autoclave using an inert gas as pressure transfer medium.

3. Use of mixed materials according to Claim 1 as detachment or break rings in the horizontal continuous casting of steel and non-ferrous metals.


**Revendications**

1. Matériaux composites polycristallins, frittés sous pression, à base de nitrure de bore, d'oxydes et de carbures, dans lesquels le nitrure de bore hexagonal est présent en une quantité de 30 à 85 % en poids, la quantité d'oxydes, choisis dans le groupe comprenant l'oxyde de zirconium et l'oxyde de magnésium, est de 10 à 50 % en poids, et la quantité de carbures, choisis dans le groupe comprenant le carbure de silicium, le carbure de titane et le carbure de zirconium, est de 5 à 20 % en poids, avec une masse volumique d'au moins 94 % de la masse volumique théorique possible (par rapport au mélange nitrure de bore/ oxyde-carbure).

2. Procédé de fabrication des matériaux composites selon la revendication 1, caractérisé en ce qu'on comprime à chaud, à des températures de 1500 à 1800°C sous une pression de poinçon de 7 à 20 MPa des mélanges de poudres constitués de nitrure de bore hexagonal ayant une teneur en oxygène de 2 à 8 % en poids et une aire spécifique de 5 à 30 M$^2$/g (mesurée par la méthode BET) et des poudres sélectionnées d'oxyde et de carbure, ayant chacune une pureté supérieure à 97 %, ou encore, dans une gaine fermée et étanche au vide, on leur fait subir une compression isostatique à chaud à des températures de 1400 à 1700°C sous une pression de 100 à 300 MPa, dans un autoclave haute pression, avec utilisation d'un gaz inerte en tant que fluide de transfert de pression.

3. Utilisation des matériaux composites selon la revendication 1, en tant qu'anneaux de détachement ou de bagues de rupture lors de la coulée continue horizontale de l'acier et des métaux non ferreux.